# EUROPÄISCHE PATENTSCHRIFT

(11) **EP 3 700 771 B1**
(45) Veröffentlichungstag und Bekanntmachung des Hinweises auf die Patenterteilung: **08.06.2022**
(21) Anmeldenummer: 18796397.0
(22) Anmeldetag: 25.10.2018
(51) Int. Cl.: B60K 37/06, B60K 35/00, G06F 3/01, G06F 3/0354, G06F 3/041

(54) **BEDIENVORRICHTUNG ZUR AUSGABE EINER HAPTISCHEN RÜCKMELDUNG, KRAFTFAHRZEUG UND VERFAHREN**
OPERATING DEVICE FOR PROVIDING HAPTIC FEEDBACK, MOTOR VEHICLE AND METHOD
DISPOSITIF DE COMMANDE POUR L'ÉMISSION D'UNE RÉPONSE HAPTIQUE, VÉHICULE AUTOMOBILE ET PROCÉDÉ

(30) Priorität: 26.10.2017 DE 102017219236
(43) Veröffentlichungstag der Anmeldung: 02.09.2020
(73) Patentinhaber: Audi AG, 85045 Ingolstadt (DE); Volkswagen Aktiengesellschaft, 38440 Wolfsburg (DE)
(72) Erfinder: MÜLLER, Ulrich, 85055 Ingolstadt (DE); ULRICH, Dominik, 38448 Wolfsburg (DE); BOESE, Christoph, 38159 Vechelde (DE)
(74) Vertreter: Hofstetter, Schurack & Partner
(86) Internationale Anmeldenummer: PCT/EP2018/079311
(87) Internationale Veröffentlichungsnummer: WO 2019/081652

(56) Entgegenhaltungen:
- DE-A1-102006 021 593
- US-A1- 2017 024 011
- US-A1- 2017 220 118

## Beschreibung

Die Erfindung betrifft eine Bedienvorrichtung zur Ausgabe einer haptischen Rückmeldung, ein Kraftfahrzeug und ein Verfahren.

Zur Unterstützung der Bedienung von Bedienoberflächen werden Aktuatoren an den Bedienoberfläche angeordnet, wodurch es möglich ist, dem Benutzer haptische Rückmeldungen während der Bedienung zu geben. Dies erfolgt indem die berührungssensitive Oberfläche mittels des Aktuators zu einer Vibration angeregt wird. Eine berührungssensitive Oberfläche kann beispielsweise ein Touchscreen oder ein Touchpad sein. Die Vibrationen weisen bevorzugt Frequenzen zwischen 40-300 Hz auf, weil in dem besagten Bereich die höchste Reizbarkeit bei Vibrationen in der Haut vorliegt. Haptische Rückmeldungen erfolgen insbesondere bei einer Betätigung einer virtuellen Taste, um somit eine Betätigung einer mechanischen Taste zu imitieren.

Neben der Ausgabe einer haptischen Rückmeldung ist es üblich, eine akustische Rückmeldung wiederzugeben, welche einem Klicklaut einer mechanischen Taste nachempfunden ist, um so eine Betätigung einer mechanischen Taste zu imitieren. Nach dem gegenwärtigen Stand der Technik ist es dabei erforderlich, einen Lautsprecher zu verwenden, welcher bevorzugt in der Nähe der Bedienoberflächen angeordnet ist. Nachteilig an dieser Lösung ist, dass hierfür ein zusätzliches Element erforderlich ist, wodurch ein erhöhter Platzbedarf besteht. Ist der Lautsprecher zu der Bedienoberfläche beabstandet, kann die durch den Lautsprecher wiedergegebene akustische Rückmeldung von einem Benutzer als unnatürlich wahrgenommen werden, weil dann die simulierte Schallquelle von der wahrgenommenen Schallquelle abweicht. Dieses Phänomen tritt insbesondere dann auf, wenn die akustische Rückmeldung Frequenzen umfasst, welche im oberen Bereich des hörbaren Spektrums liegen.

In der DE 10 2014 018 350 A1 ist eine Kraftfahrzeug-Bedienvorrichtung mit Tastenbedienung und Zeicheneingabe beschrieben. Dabei kann ein Aktuator einen Lautsprecher umfassen, welcher dazu eingerichtet ist, ein Geräusch auszugeben.

In der US 2017/0021762 A1 sind ein haptisches System und ein Verfahren zur Steuerung des haptischen Systems beschrieben. Dabei ist es vorgesehen, einen Unwuchtaktuator zur Erzeugung einer haptischen Rückmeldung bei einer Betätigung einer Bedienoberfläche zu verwenden.

In der WO 2015/086568 A1 ist eine Bedieneinrichtung für ein elektrisches Gerät, insbesondere für eine Fahrzeugkomponente beschrieben. Dabei wird eine haptische Rückmeldung mittels eines Unwuchtmotors erzeugt.

In der US 2017/024011 A1 ist ein haptisches Element beschrieben, das Vibrationsfrequenzen im Bereich des hörbaren Spektrums erzeugt.

In der DE 10 2006 021 593 A1 ist beschrieben, dass mittels eines haptischen Elements auch ein Geräusch erzeugt werden kann.

In der US 2017/220118 A1 ist beschreiben, dass bei einem haptischen Element dessen Ausgabefrequenz in Abhängigkeit von einer Fingerbewegung moduliert werden kann.

Es ist eine Aufgabe der Erfindung, eine in eine Bedienoberfläche integrierte Quelle einer akustischen Rückmeldung bereitzustellen.

Erfindungsgemäß wird eine Bedienvorrichtung zur Ausgabe einer Rückmeldung gemäß Anspruch 1 bereitgestellt. Die Bedienvorrichtung umfasst eine Bedienoberfläche, einen zumindest mittelbar mit der Bedienoberfläche gekoppelten Aktuator zum Erzeugen einer haptischen Rückmeldung an der Bedienoberfläche und eine Steuereinheit, welche dazu eingerichtet ist, den Aktuator mittels eines Haptikanteils eines Steuersignals zum Erzeugen der haptischen Rückmeldung anzusteuern. Die Steuereinheit ist auch dazu eingerichtet, den Aktuator mittels eines Akustikanteils des Steuersignals zum Erzeugen einer akustischen Rückmeldung anzusteuern. Des Weiteren umfasst die Bedienvorrichtung eine Steuereinheit, welche dazu eingerichtet ist, einen Aktuator mittels eines Steuersignals anzusteuern. Der Aktuator ist unmittelbar oder zumindest mittelbar an einer Bedienoberfläche angeordnet. Das Steuersignal umfasst einen Akustikanteil und einen Haptikanteil. Mittels des Haptikanteils wird der Aktuator so angesteuert, dass eine haptische Rückmeldung an der Bedienoberfläche erzeugt wird. Mittels des Akustikanteils wird der Aktuator so angesteuert, dass eine akustische Rückmeldung erzeugt wird. Dadurch ergibt sich der Vorteil, dass sowohl die akustische, als auch die haptische Rückmeldung durch den Aktuator erzeugt werden. Es ist beispielsweise möglich, dass die Steuereinheit einen Mikrocontroller oder einen Mikroprozessor ist, welcher dazu eingerichtet ist, das Steuersignal zu erzeugen. Der Aktuator kann beispielsweise ein Bauteil sein, welches dazu eingerichtet ist, sich mittels eines Kolbens oder eines Ankers zu einer mechanischen Schwingung gemäß dem Steuersignal anzuregen. Der Aktuator kann beispielsweise direkt an der Rückseite der Bedienoberfläche angeordnet sein. In diesem Fall ist er direkt mit der Bedienoberfläche gekoppelt, sodass die mechanischen Schwingungen direkt auf die Bedienoberfläche übertragen werden. Der Aktuator kann beispielsweise auch an einer Halterung der Bedienoberfläche angeordnet sein. In diesem Fall ist er mittelbar mit der Bedienoberfläche gekoppelt, sodass die mechanischen Schwingungen über die Halterung auf die Bedienoberfläche übertragen werden können. Die Bedienoberfläche kann beispielsweise eine berührungssensitive Oberfläche, insbesondere eine berührungssensitive Bildschirmoberfläche sein. Der Haptikanteil des Steuersignals ist der Anteil, welcher die haptische Rückmeldung definiert. Die Frequenzen und die Amplituden der haptischen Rückmeldung können so gewählt sein, dass sie an der Bedienoberfläche von der menschlichen Haut wahrgenommen werden können. Der Akustikanteil des Steuersignals ist der Anteil, welcher die akustische Rückmeldung definiert. Der Akustikanteil kann so definiert sein, dass er eine mechanische Schwingung des Aktuators und/oder der Bedienoberfläche in einem Frequenzbereich von 0-22.000 Hz beschreibt.

Die Erfindung sieht vor, dass der Aktuator als Gleichspannungs-Unwucht-Aktuator gestaltet ist. Mit anderen Worten handelt es sich bei dem Aktuator um einen Elektromotor, welcher einen Anker mit einer nicht-rotationssymmetrischen Masse umfasst, sodass der Anker bei einer Rotation eine Unwucht aufweist, welche den Aktuator zu einer mechanischen Schwingung anregt. Der Elektromotor wird dabei von einer Gleichspannung angetrieben. Ein solcher Aktuator ist auch als Eccentric-Rotating-Mass-Actuator bekannt. Dadurch ergibt sich der Vorteil, dass durch den Aktuator ein größerer Frequenzbereich abgedeckt wird, als dies bei Linear-Resonanz-Aktuatoren möglich ist.

Die Erfindung sieht vor, dass der Haptikanteil ein Gleichspannungsanteil des Steuersignals und der Akustikanteil ein Wechselspannungsanteil des Steuersignals ist. Mit anderen Worten umfasst das Steuersignal einen Gleichspannungsanteil, welcher den Haptikanteil des Steuersignals darstellt und einen Wechselspannungsanteil, welcher den Akustikanteil des Steuersignals darstellt. Dadurch ergibt sich der Vorteil, dass das Steuersignal einen Haptikanteil, betreffend die Winkelgeschwindigkeit des Aktuators und einen Akustikanteil, betreffend eine periodische Variation der Winkelgeschwindigkeit des Aktuators umfasst. So ist es möglich, dass die haptische Rückmeldung durch die Unwucht des Aktuators erzeugt wird und die Frequenz der haptischen Rückmeldung abhängig ist von der Winkelgeschwindigkeit des Aktuators, welche wiederum von dem Gleichspannungsanteil des Steuersignals abhängig ist. Die akustische Rückmeldung kann durch Vibrationen erzeugt werden, welche durch den Wechselspannungsanteil des Steuersignals hervorgerufen werden, wodurch die Winkelgeschwindigkeit des Aktuators variiert wird.

Eine Weiterbildung der Erfindung sieht vor, dass die Steuereinheit dazu eingerichtet ist, einen Anker des Aktuator mittels des Akustikanteils des Steuersignals zu einer mechanischen Schwingung zur Erzeugung der akustischen Rückmeldung anzuregen. Mit anderen Worten ist die Steuereinheit dazu eingerichtet, den Akustikanteil des Steuersignals so zu erzeugen, dass ein Anker des Aktuators die akustische Rückmeldung mittels einer mechanischen Schwingung erzeugt. Dadurch ergibt sich der Vorteil, dass durch die Verwendung des Ankers ein zusätzlicher Frequenzbereich abgedeckt werden kann, als mit dem gesamten Aktuator. So ist es möglich, dass der Anker durch den Akustikanteil des Steuersignals beschleunigt wird, sodass dieser in einer Resonanzfrequenz des Ankers schwingt und dadurch die akustische Rückmeldung erzeugt.

Eine Weiterbildung der Erfindung sieht vor, dass der Aktuator in Abhängigkeit von dem Haptikanteil eine Rotation oder Pendelbewegung mit einer Aktuatorperiodendauer ausführt und der Akustikanteil Schwingungen umfasst, deren Periodendauer kürzer als eine Aktuator Periodendauer ist. Mit anderen Worten umfasst der Akustikanteil Schwingungen, deren Frequenzen höher sind als die Frequenz des Aktuators. Dadurch ergibt sich der Vorteil, dass der Aktuator zu Schwingungen angeregt werden kann, welche höhere Frequenzen aufweisen als eine Betriebsfrequenz des Aktuators. So ist es möglich, dass der Aktuator mit einer vorbestimmten Periodendauer zur Erzeugung der haptischen Rückmeldung betrieben wird. Dabei kann der Akustikanteil des Steuersignals Schwingungen umfassen, deren Periodendauer kürzer ist als die Periodendauer eines Umlauf des Aktuators. So ist es möglich, dass der Aktuator beispielsweise eine Umlauffrequenz von 50 Hz aufweist, und der Akustikanteil eine Schwingung einer Frequenz von 100 Hz umfasst.

Eine Weiterbildung der Erfindung sieht vor, dass die Bedienvorrichtung dazu eingerichtet ist, eine akustische Rückmeldung zumindest in einem Frequenzbereich von 1 bis 5 kHz auszugeben. Mit anderen Worten kann durch die Bedienvorrichtung ein Audioschall in einem Frequenzbereich von zumindest 1 bis 5 kHz als akustische Rückmeldung ausgegeben werden. Dadurch ergibt sich der Vorteil, dass die Bedienvorrichtung ein Audioschall abgeben kann, welcher die bei akustischen Rückmeldungen üblichen Frequenzen umfasst. So ist es möglich, dass der Aktuator dazu eingerichtet ist, in einem Frequenzbereich von zumindest 1 bis 5 kHz zu vibrieren und diese Vibrationen als akustische Rückmeldung auszugeben oder die Bedienoberfläche zu einer Schwingung in einem Frequenzbereich von zumindest 1 bis 5 kHz anzuregen, sodass diese eine Rückmeldung ausgibt.

Eine Weiterbildung der Erfindung sieht vor, dass die Bedienvorrichtung dazu eingerichtet ist, die akustische Rückmeldung mittels einer Schwingungsanregung der Bedienoberfläche durch den Aktuator zu erzeugen. Mit anderen Worten ist die Bedienvorrichtung so eingerichtet, dass die Bedienoberfläche derart beschaffen ist, dass sie zumindest in dem Frequenzbereich der akustischen Rückmeldung durch den Aktuator zu einer Schwingung angeregt werden kann, um somit die akustische Rückmeldung auszugeben. Dadurch ergibt sich der Vorteil, dass die Bedienoberfläche als Lautsprechermembran genutzt werden kann.

Die Erfindung umfasst auch ein Kraftfahrzeug, welches eine oder mehrere der erfindungsgemäßen Bedienvorrichtung umfasst. Das Kraftfahrzeug kann ein Kraftwagen sein, wie beispielsweise ein Personenkraftwagen oder ein Lastkraftwagen.

Die Erfindung umfasst auch ein Verfahren zum Betrieb einer Bedienvorrichtung gemäß Anspruch 7. Dabei ist es vorgesehen, dass durch eine Steuereinheit ein Steuersignal, umfassend einen Haptikanteil erzeugt wird und ein zumindest mittelbar mit einer Bedienoberfläche gekoppelten Aktuator mittels des Steuersignals angesteuert wird. Gemäß dem Haptikanteil des Steuersignals wird durch den Aktuator eine haptische Rückmeldung an der Bedienoberfläche erzeugt. Das Steuersignal umfasst auch einen Akustikanteil, wobei der Aktuator gemäß dem Akustikanteil des Steuersignals eine akustische Rückmeldung erzeugt. Mit anderen Worten wird durch die Steuereinheit der Bedienvorrichtung ein Steuersignal erzeugt, welches einen Haptikanteil und einen Akustikanteil umfasst. Mittels des Steuersignals wird durch die Steuereinheit der an der Bedienoberfläche angeordnete Aktuator der Bedienvorrichtung angesteuert. Der Aktuator erzeugt gemäß dem Haptikanteil des Steuersignals eine haptische Rückmeldung an der Bedienoberfläche. Gemäß dem Akustikanteil des Steuersignals erzeugt der Aktuator eine akustische Rückmeldung. Dadurch ergibt sich der Vorteil, dass durch Bedienvorrichtung eine haptische Rückmeldung und eine akustische Rückmeldung ausgegeben werden kann. So ist es möglich, dass die Steuereinheit ein Steuersignal zur Ansteuerung eines als Linear-Resonanz-Aktuator gestalteten Aktuators erzeugt. Der Haptikanteil des Steuersignals kann eine Schwingung mit 40 - 300 Hz sein, mit welcher der Aktuator betrieben werden kann. Die Frequenz des Haptikanteil kann mit der Resonanzfrequenz des Aktuators übereinstimmen. Der Aktuator kann eine Vibration mit 40 - 300 Hz durchführen, welche sich auf die Bedienoberfläche übertragen kann und auf der Bedienoberfläche die haptische Rückmeldung erzeugen kann. Der Akustikanteil des Steuersignals kann eine oder mehrere Schwingungen umfassen, welche die Schwingung des Steuersignals überlagern. Diese Schwingungen können Frequenzen über 300 Hz Hz umfassen, wodurch eine Schwingung des Aktuators durch Schwingungen des Akustikanteils überlagert werden kann. Somit kann die Schwingung des Aktuators ungleichmäßig erfolgen, wodurch zusätzliche Vibrationen erfolgen können, welche zu einer Ausgabe der akustischen Rückmeldung führen können.

Zu der Erfindung gehören auch Weiterbildungen des erfindungsgemäßen Verfahrens und des erfindungsgemäßen Kraftfahrzeugs, die Merkmale aufweisen, wie sie bereits im Zusammenhang mit den Weiterbildungen der erfindungsgemäßen Bedienvorrichtung beschrieben worden sind. Aus diesem Grund sind die entsprechenden Weiterbildungen des erfindungsgemäßen Verfahrens und des erfindungsgemäßen Kraftfahrzeugs hier nicht noch einmal beschrieben.

Im Folgenden sind Ausführungsbeispiele der Erfindung beschrieben. Hierzu zeigt:
- Fig. 1: eine erfindungsgemäße Bedienvorrichtung in einem Kraftfahrzeug; und
- Fig. 2: ein mögliches Steuersignal.

In den Figuren sind funktionsgleiche Elemente jeweils mit denselben Bezugszeichen versehen.

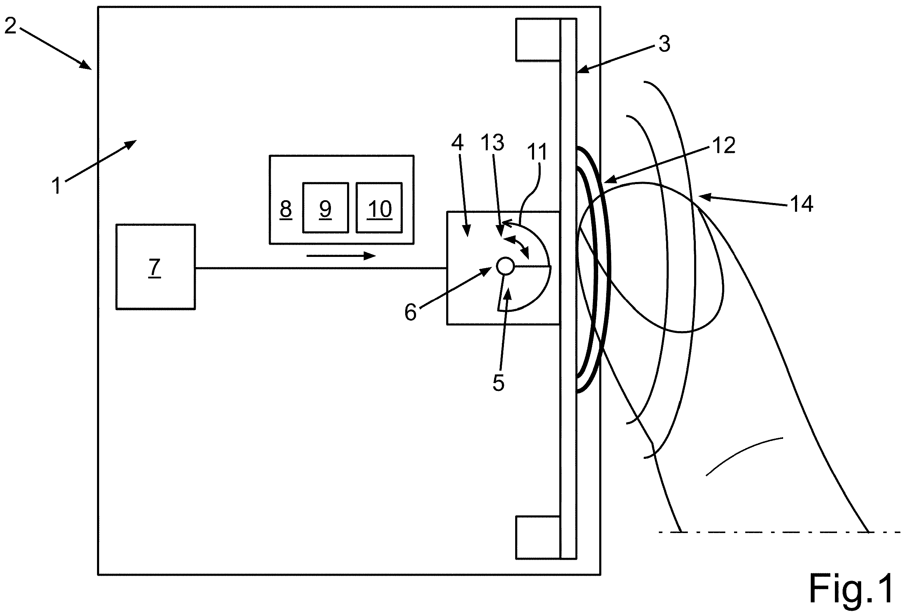

Fig. 1 zeigt eine erfindungsgemäße Bedienvorrichtung 1 in einem Kraftfahrzeug 2. Die Bedienvorrichtung 1 umfasst eine Bedienoberfläche 3. Dabei kann es sich beispielsweise um eine berührungssensitive Oberfläche (Touchscreen oder Touchpad) oder eine Oberfläche einer Taste handeln. Die Bedienvorrichtung 1 umfasst einen Aktuator 4, welcher zumindest mittelbar mit der Bedienoberfläche 3 gekoppelt ist. Das kann beispielsweise bedeuten, dass der Aktuator 4 direkt an der Bedienoberfläche 3 befestigt ist, sodass durch ihn erzeugte mechanische Schwingungen direkt auf die Bedienoberfläche 3 übertragen werden oder, dass der Aktuator 4 an einem Element befestigt ist, durch welches die mechanischen Schwingungen auf die Bedienoberfläche übertragen werden. Erfindungsgemäß ist der in Fig. 1 dargestellte Aktuator 4 ein Gleichspannungs-Unwucht-Aktuator. Der Aktuator 4 kann einen Anker 5 umfassen, der so beschaffen ist, dass eine Drehachse 6 des Aktuators 4 nicht durch den Schwerpunkt des Ankers 5 verläuft. Somit kann eine Rotation des Ankers 5 zu einer Unwucht führen, wodurch der Aktuator 4 vibrieren kann. Die Vibration kann auf die Bedienoberfläche 3 übertragen werden, sodass diese zu einer Schwingung angeregt werden kann. Die Bedienvorrichtung 1 umfasst auch eine Steuereinheit 7.

Dabei kann es sich um einen Mikroprozessor oder einen Mikrocontroller handeln. Die Steuereinheit 7 ist dazu eingerichtet, den Aktuator 4 mittels eines Steuersignals 8 anzusteuern. Das Steuersignal 8 umfasst einen Haptikanteil 9 und einen Akustikanteil 10. Der Haptikanteil 9 des Steuersignals ist ein Gleichspannungsanteil des Steuersignals. Der Akustikanteil 10 des Steuersignals 8 ist ein Wechselspannungsanteil des Steuersignals 8. Der Akustikanteil 10 kann Schwingungen umfassen, deren Periodendauer kürzer als eine Aktuatorperiodendauer ist. Die Aktuatorperiodendauer kann beispielsweise eine Umlaufzeit des Ankers 5 sein. Der Anker 5 des Aktuators 4 kann sich gemäß dem Haptikanteil 9 des Steuersignals mit einer Winkelgeschwindigkeit 11 drehen, wodurch der Aktuator 4 vibrieren kann und die Vibrationen an die Bedienoberfläche 3 übertragen kann. Über die Bedienoberfläche 3 wird die in dem Haptikanteil 9 des Steuersignals definierte haptische Rückmeldung 12erzeugt. Der Akustikanteil 10 des Steuersignals 8 kann mehrere Schwingungen umfassen, welche die durch den Haptikanteil 9 definierte Winkelgeschwindigkeit 11 variieren. Diese Variationen 13 können zusätzliche Schwingungen im Anker 5 oder im Aktuator 4 hervorrufen. Diese Schwingungen können als akustische Rückmeldung 14 von dem Aktuator 4 selbst und/oder der Bedienoberfläche 3 abgegeben werden. Die akustische Rückmeldung 14 kann zumindest einen Frequenzbereich von 1 kHz bis 5 kHz umfassen.

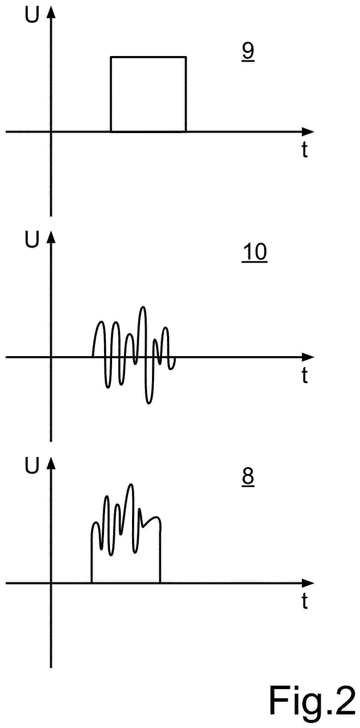

Fig. 2 zeigt ein mögliches Steuersignal 8 zur Ansteuerung des Aktuators. Das Steuersignal 8 umfasst einen Haptikanteil 9, wobei es sich erfindungsgemäß um einen Gleichspannungsanteil des Steuersignals handelt. Der Haptikanteil 9 kann beispielsweise als Stufensignal gestaltet sein. Das Steuersignal 8 umfasst auch einen als Wechselspannungssignal gestalteten Akustikanteil 10. Der Akustikanteil 10 kann Schwingungen umfassen, deren Periodendauer kürzer ist als eine Aktuatorperiodendauer. Die Schwingungen des Akustikanteils 10 können beispielsweise eine Resonanzfrequenz des Ankers 5 umfassen. Das Steuersignal 8 ist eine Überlagerung des Haptikanteil 9 mit dem Akustikanteil 10. Dabei können die beiden Anteile so beschaffen sein, dass die Spannung keine negativen Werte annimmt. Insgesamt zeigen die Beispiele, wie durch die Erfindung eine in eine Bedienoberfläche 3 integrierte Quelle einer akustischen Rückmeldung bereitgestellt wird.

## Patentansprüche

1. Bedienvorrichtung (1) zur Ausgabe einer Rückmeldung mit
- einer Bedienoberfläche (3),
- einem zumindest mittelbar mit der Bedienoberfläche (3) gekoppelten, als Gleichspannungs-Unwucht-Aktuator gestalteten Aktuator (4) zum Erzeugen einer haptischen Rückmeldung (12) an der Bedienoberfläche (3),
- einer Steuereinheit (7), welche dazu eingerichtet ist, den Aktuator (4) mittels eines Haptikanteils (9) eines Steuersignals (8) zum Erzeugen der haptischen Rückmeldung (12) anzusteuern, wobei
- die Steuereinheit (7) dazu eingerichtet ist, den Aktuator (4) mittels eines Akustikanteils (14) des Steuersignals (8) zum Erzeugen einer akustischen Rückmeldung (14) anzusteuern, und
- der Haptikanteil (9) ein Gleichspannungsanteil des Steuersignals (8) und der Akustikanteil (10) ein Wechselspannungsanteil des Steuersignals (8) ist.

2. Bedienvorrichtung (1) nach Anspruch 1, **dadurch gekennzeichnet, dass**
die Steuereinheit (7) dazu eingerichtet ist, einen Anker (5) des Aktuators (4) mittels des Akustikanteils (10) des Steuersignals (8) zu einer mechanischen Schwingung zur Erzeugung der akustischen Rückmeldung (14) anzuregen.

3. Bedienvorrichtung (1) nach einem der vorhergehenden Ansprüche, **dadurch gekennzeichnet, dass**
der Aktuator (4) in Abhängigkeit von dem Haptikanteil (9) eine Rotation oder Pendelbewegung mit einer Aktuatorperiodendauer ausführt und der Akustikanteil (10) Schwingungen umfasst, deren Periodendauer kürzer als die Aktuatorperiodendauer ist.

4. Bedienvorrichtung (1) nach einem der vorhergehenden Ansprüche, **dadurch gekennzeichnet, dass**
die Bedienvorrichtung (1) dazu eingerichtet ist, eine akustische Rückmeldung (14) zumindest in einem Frequenzbereich von 1 kHz bis 5 kHz auszugeben.

5. Bedienvorrichtung (1) nach einem der vorhergehenden Ansprüche, **dadurch gekennzeichnet, dass**
die Bedienvorrichtung (1) dazu eingerichtet ist, die akustische Rückmeldung (14) mittels einer Schwingungsanregung der Bedienoberfläche (3) durch den Aktuator (4) zu erzeugen.

6. Kraftfahrzeug (2) mit einer Bedienvorrichtung (1) nach einem der vorhergehenden Ansprüche.

7. Verfahren zum Betrieb einer Bedienvorrichtung (1), wobei
- durch eine Steuereinheit (7) ein Steuersignal (8), umfassend einen Haptikanteil (9), erzeugt wird,
- ein zumindest mittelbar mit einer Bedienoberfläche (3) gekoppelten, als Gleichspannungs-Unwucht-Aktuator gestalteter Aktuator (4) mittels des Steuersignals (8) angesteuert wird,
- durch den Aktuator (4) gemäß dem Haptikanteil (9) des Steuersignals (8) eine haptischen Rückmeldung (12) an der Bedienoberfläche (3) erzeugt wird, wobei
- das Steuersignal (8) umfassend einen Akustikanteil (10) durch die Steuereinheit (7) erzeugt wird,
- durch den Aktuator (4) gemäß dem Akustikanteil (10) des Steuersignals (8) eine akustische Rückmeldung (14) erzeugt wird, und
- der Haptikanteil (9) ein Gleichspannungsanteil des Steuersignals (8) und der Akustikanteil (10) ein Wechselspannungsanteil des Steuersignals (8) ist.

## Claims

1. An operator control apparatus (1) for outputting a feedback comprising:
- an operator control surface (3),
- an actuator (4) at least indirectly coupled to the operator control surface (3), which is configured as a DC voltage unbalance actuator, for generating a haptic feedback (12) on the operator control surface (3),
- a control unit (7), which is configured to control the actuator (4) by means of a haptic component (9) of a control signal (8) for generating the haptic feedback (12), wherein
- the control unit (7) is configured to drive the actuator (4) by means of an acoustic component (14) of the control signal (8) for generating an acoustic feedback (14), and
- the haptic component (9) is a DC voltage component of the control signal (8) and the acoustic component (10) is an AC voltage component of the control signal (8).

2. The operator control apparatus (1) according to claim 1, **characterized in that** the control unit (7) is configured to excite an armature (5) of the actuator (4) to a mechanical oscillation by means of the acoustic component (10) of the control signal (8) for generating the acoustic feedback (14).

3. The operator control apparatus (1) according to any one of the preceding claims,
**characterized in that**
the actuator (4) executes a rotation or reciprocating movement with an actuator period duration depending on the haptic component (9) and the acoustic component (10) includes oscillations, the period duration of which is shorter than the actuator period duration.

4. The operator control apparatus (1) according to any one of the preceding claims, **characterized in that**
the operator control apparatus (1) is configured to output an acoustic feedback (14) at least in a frequency range from 1 kHz to 5 kHz.

5. The operator control apparatus (1) according to any one of the preceding claims, **characterized in that**
the operator control apparatus (1) is configured to generate the acoustic feedback (14) by means of an oscillation excitation of the operator control surface (3) by the actuator (4).

6. A motor vehicle (2) with an operator control apparatus (1) according to any one of the preceding claims.

7. A method for operating an operator control apparatus (1), wherein
- a control signal (8) including a haptic component (9) is generated by a control unit (7),
- an actuator (4) at least indirectly coupled to an operator control surface (3), which is configured as a DC voltage unbalance actuator, is driven by means of the control signal (8),
- a haptic feedback (12) is generated on the operator control surface (3) by the actuator (4) according to the haptic component (9) of the control signal (8), wherein
- the control signal (8) including an acoustic component (10) is generated by the control unit (7),
- an acoustic feedback (14) is generated by the actuator (4) according to the acoustic component (10) of the control signal (8), and
- the haptic component (9) is a DC voltage component of the control signal (8) and the acoustic component (10) is an AC voltage component of the control signal (8).

## Revendications

1. Dispositif de commande (1) pour la sortie d'une rétroaction, comportant
- une surface de commande (3),
- un actionneur (4), qui est couplé au moins indirectement à la surface de commande (3), conçu en tant qu'actionneur à balourd à tension continue, pour générer une rétroaction haptique (12) sur la surface de commande (3),
- une unité de commande (7), qui est conçue, à cet effet, pour commander l'actionneur (4) par l'intermédiaire d'un composant haptique (9) d'un signal de commande (8), pour générer la rétroaction haptique (12),
dans lequel
- l'unité de commande (7) est conçue, à cet effet, pour commander l'actionneur (4) par l'intermédiaire d'un composant acoustique (14) du signal de commande (8), pour générer une rétroaction acoustique (14), et
- le composant haptique (9) est un composant de tension continue du signal de commande (8), et le composant acoustique (10) est un composant de tension alternative du signal de commande (8).

2. Dispositif de commande (1) selon la revendication 1, **caractérisé en ce que**
l'unité de commande (7) est conçue, à cet effet, pour exciter un induit (5) de l'actionneur (4) par l'intermédiaire du composant acoustique (10) du signal de commande (8), pour qu'il effectue une vibration mécanique, afin de générer la rétroaction acoustique (14).

3. Dispositif de commande (1) selon l'une quelconque des revendications précédentes,
**caractérisé en ce que**
l'actionneur (4) exécute, en fonction du composant haptique (9), une rotation ou un mouvement pendulaire avec une durée de période d'actionneur, et le composant acoustique (10) comprend des vibrations, dont la durée de période est plus courte que la durée de période d'actionneur.

4. Dispositif de commande (1) selon l'une quelconque des revendications précédentes,
**caractérisé en ce que**
le dispositif de commande (1) est conçu, à cet effet, pour sortir une rétroaction acoustique (14), au moins dans une gamme de fréquence de 1 kHz à 5 kHz.

5. Dispositif de commande (1) selon l'une quelconque des revendications précédentes,
**caractérisé en ce que**
le dispositif de commande (1) est conçu, à cet effet, pour générer la rétroaction acoustique (14) par l'intermédiaire d'une excitation de vibrations de la surface de commande (3) par l'actionneur (4).

6. Véhicule automobile (2), comportant un dispositif de commande (1) selon l'une quelconque des revendications précédentes.

7. Procédé de fonctionnement d'un dispositif de commande (1), dans lequel
- par une unité de commande (7), un signal de commande (8), comportant un composant haptique (9), est généré,
- un actionneur (4), qui est couplé au moins indirectement à la surface de commande (3), conçu en tant qu'actionneur à balourd à tension continue, est commandé par l'intermédiaire du signal de commande (8),
- par l'actionneur (4), selon le composant haptique (9) du signal de commande (8), une rétroaction haptique (12) est générée à la surface de commande (3),
dans lequel
- le signal de commande (8), comportant un composant acoustique (10), est généré par l'unité de commande (7),
- par l'actionneur (4), selon le composant acoustique (10) du signal de commande (8), une rétroaction acoustique (14) est générée,
et
- le composant haptique (9) est un composant de tension continue du signal de commande (8), et le composant acoustique (10) est un composant de tension alternative du signal de commande (8).
